# EUROPÄISCHE PATENTSCHRIFT

(11) **EP 0 663 550 B1**
(45) Veröffentlichungstag und Bekanntmachung des Hinweises auf die Patenterteilung: **15.04.1998**
(21) Anmeldenummer: 95100552.9
(22) Anmeldetag: 17.01.1995
(51) Int. Cl.: F16K 3/32

(54) **Schieberventil**
Gate valve
Robinet-vanne

(30) Priorität: 18.01.1994 DE 4401297
(43) Veröffentlichungstag der Anmeldung: 19.07.1995
(73) Patentinhaber: RANCO INCORPORATED OF DELAWARE, Dublin, Ohio 43017 (US)
(72) Erfinder: Flory, Gerhard, Dipl.-Ing., D-76855 Annweiler (DE); Krupp, Willi, D-68775 Ketsch (DE); Klipfel, Bernhard, Dipl.-Ing., D-76187 Karlsruhe (DE)
(74) Vertreter: Füchsle, Klaus, Dipl.-Ing.

(56) Entgegenhaltungen:
- GB-A- 2 001 413
- US-A- 4 479 670

## Beschreibung

Die vorliegende Erfindung betrifft ein Schieberventil nach dem Oberbegriff des Patentanspruchs 1.

Ein derartiges Schieberventil ist aus der US-A-4 479 670 bekannt. Derartige Schieberventile werden beispielsweise in Kraftfahrzeugen eingesetzt um den Wasserdurchsatz durch Heizungswärmetauscher zu regulieren und umfassen ein Ventilgehäuse, das einen Durchflußkanal zwischen einem Einlaß und einem Auslaß aufweist. In dem Ventilgehäuse sind in Durchflußrichtung gesehen ein Schieber, eine Blende und eine Dichtfeder angeordnet. Sowohl in der Blende wie auch im Schieber befinden sich Durchflußöffnungen, wobei der Durchfluß durch das Ventil mit Hilfe eines Bowdenzuges reguliert wird, der den Schieber gegenüber der Blende entsprechend verschiebt. Die in dem Schieber ausgebildete Durchflußöffnung weist dabei einen schlitzartig ausgebildeten Bereich auf, der beispielsweise in einen im wesentlichen trapezförmigen Bereich mündet. Je nach eingestelltem Hub des Schiebers öffnet sich ein bestimmter Querschnitt für den Wasserdurchfluß, wodurch insgesamt der Wasserdurchsatz reguliert wird.

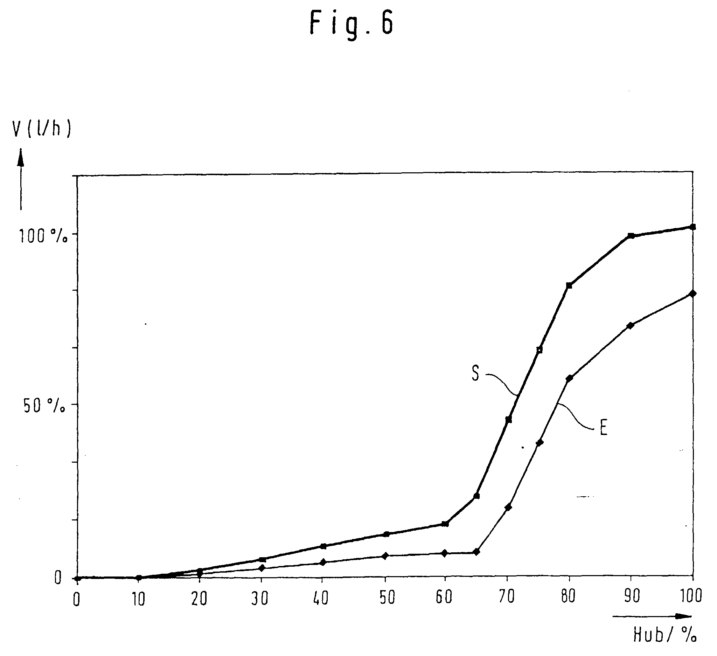

Im Bereich des Automobilbaus wird in letzter Zeit zunehmend eine sogenannte progressive Durchflußcharakteristik derartiger Ventile gewünscht. Dies bedeutet, daß in einem Einstellbereich von ca. 10 bis 60% der Temperatureinstellung am Armaturenbrett eine sehr feinfühlige Einstellung der Wärmeleistung der Heizung möglich sein soll. Ab ca. 70% des Hebelwegs soll dann jedoch möglichst viel Wärme in den Innenraum transportiert werden. Eine derartige progressive Durchflußcharakteristik ist beispielhaft in Fig. 6 dargestellt und mit dem Bezugszeichen S bezeichnet. Hierbei ist der in dem Schieber vorgesehene schlitzartig ausgebildete Bereich für den Durchfluß im Bereich bis ca. 60% des Ventilhubes verantwortlich.

Da der Ventilschieber einem Verschleiß unterliegt, wird dieser üblicherweise in Keramik gefertigt. Bedingt durch das hierfür erforderliche Herstellungsverfahren kann jedoch der schlitzartige Bereich, der eine Breite von ca. 1 mm aufweisen kann, in einer Serienfertigung nicht schmaler ausgeführt werden. Um entsprechend den Kundenwünschen trotzdem noch geringere Durchflüsse zu realisieren, wurde bisher am Ventil zusätzlich eine progressive Hebelbetätigung eingesetzt.

Eine derartige progressive Mechanik bringt jedoch erhebliche Nachteile mit sich, da über den gesamten Ventilhub gesehen, verschieden große Betätigungskräfte erforderlich sind. Nach Einsetzen der Progressivität treten darüber hinaus hohe Reibverluste auf. Aufgrund eines relativ hohen und auch ungleichmäßigen Verschleißes ist darüber hinaus die Lebensdauer eines derartigen Ventils verringert. Gleichzeitig besitzt eine solche Mechanik eine große Hysterese sowie ungünstige Toleranzen in der Durchflußcharakteristik. Schließlich sind hierfür sehr hohe Teile- und Montagekosten sowie ein hoher Entwicklungsaufwand erforderlich.

Es ist deshalb das der vorliegenden Erfindung zugrundeliegende Problem (Aufgabe) ein Schieberventil der eingangs genannten Art zu schaffen, das einfach und billig herzustellen ist, gleichmäßige Betätigungskräfte aufweist und mit dem im Bereich zwischen 10 und 70% des Ventilhubes eine sehr feinfühlige Einstellung möglich ist.

Diese Aufgabe wird durch die Merkmale des Patentanspruchs 1 gelöst.

Durch die in Durchflußrichtung gesehen vor oder hinter dem schlitzartig ausgebildeten Bereich zusätzlich vorgesehene Rippe, ist im Durchflußbereich des Ventils ein Hindernis geschaffen, durch das beliebig kleine Durchflußwerte bzw. extrem progressive Durchflußcharakteristiken realisiert werden können. Hierbei sind Positionstoleranzen des Schiebers unkritisch und der Ventilhub verläuft vollkommen linear. Das erfindungsgemäße Ventil ist billig herzustellen wobei zusätzlich Schmutzpartikel, die sich in der Nähe des schlitzartigen ausgebildeten Bereiches festgesetzt haben, im Bereich der Rippe durch eine Schieberbewegung entfernt werden können.

Vorteilhafte Ausführungsformen der Erfindung sind durch die Unteransprüche gekennzeichnet.

So kann nach einer ersten Ausbildung der Erfindung die Rippe an der Blende ausgebildet sein. Sofern in der Blende drei räumlich voneinander getrennte Öffnungen vorgesehen sind, welche die Durchflußöffnung der Blende bilden, können diese drei Öffnungen in vorteilhafter Weise an die Rippe angrenzen.

Für bestimmte Anwendungen wird bei den beschriebenen Schieberventilen eine relativ hohe Druckdifferenz von über 500 mbar gefordert. Hierbei kann sich eine Druckabhängigkeit der Drosselwirkung des Ventils ergeben. Nach einer weiteren vorteilhaften Ausführungsform der Erfindung ist jedoch die Auswirkung des Ventils unabhängig vom jeweils eingebrachten Druck. Ein solches druckunabhängiges Schieberventil kann dadurch erreicht werden, daß der zwischen Rippe und Schieber vorgesehene geringe Abstand auch bei einer Druckerhöhung beibehalten wird. Dies kann beispielsweise dadurch erzielt werden, daß die Rippe einstückig mit der Blende ausgebildet wird, wobei Schieber und Blende plan aufeinander aufliegen. Hierdurch ist gewährleistet, daß sich auch bei einer Druckerhöhung der geringe Abstand zwischen Rippe und Schieber nicht ändert.

Nach einer weiteren vorteilhaften Ausbildung der Erfindung kann die Rippe am Ventilgehäuse ausgebildet sein. Dies stellt eine fertigungstechnisch gesehen sehr einfache Lösung des eingangs genannten Problems dar. Zur Verbesserung der Durchflußeigenschaften kann die Rippe an einer Seite abgerundet sein, wobei die andere Seite der Rippe doppelseitig angefast sein kann. Bei Druckerhöhung kann sich hierbei jedoch der Abstand zwischen Rippe und Schieber ändern, da der Schieber durch den höheren Wasserdruck gegen die Dicht feder gedrückt wird. Eine derartige Abstandsänderung beeinflußt jedoch den Volumenstrom durch das Ventil.

Zur Beseitigung dieses unerwünschten Druckeinflusses kann nach einer weiteren vorteilhaften Ausbildung der Erfindung der schlitzartig ausgebildete Bereich des Schiebers gestuft ausgebildet sein, wobei diese gestufte Ausbildung durch zwei verschieden breite Schlitze erreicht wird. Hierbei kann einer der Schlitze breiter sein als die Rippe. Durch eine derartige Ausbildung ist der Einfluß einer Druckerhöhung auf das Durchflußverhalten des Ventils verringert, da bei einer Druckerhöhung die Rippe ein wenig in den breiteren Schlitz gedrückt wird, wobei jedoch das Wasser noch zwischen Rippe und breiterem Schlitz durchfließen kann, ohne daß es zu einer unerwünschten Änderung der Drosselwirkung kommt.

Nachfolgend wird die Erfindung rein beispielhaft anhand der beigefügten Zeichnungen beschrieben.

Es zeigen:
- Fig. 1: einen Querschnitt durch ein Schieberventil gemäß einer ersten Ausführungsform der Erfindung;
- Fig. 2A: die Blende des in Fig. 1 dargestellten Ventils;
- Fig. 2B: den Schieber des in Fig. 1 dargestellten Ventils;
- Fig. 3: einen Querschnitt durch ein erfindungsgemäßes Schieberventil gemäß einer zweiten Ausführungsform der Erfindung;
- Fig. 4: eine vergrößerte Darstellung des Bereichs IV von Fig. 3;
- Fig. 5: eine vergrößerte Teildarstellung eines Ventils gemäß einer weiteren Ausführungsform der Erfindung; und
- Fig. 6: Durchflußcharakteristiken eines herkömmlichen Ventils und eines Ventils gemäß der ersten Ausführungsform der Erfindung.

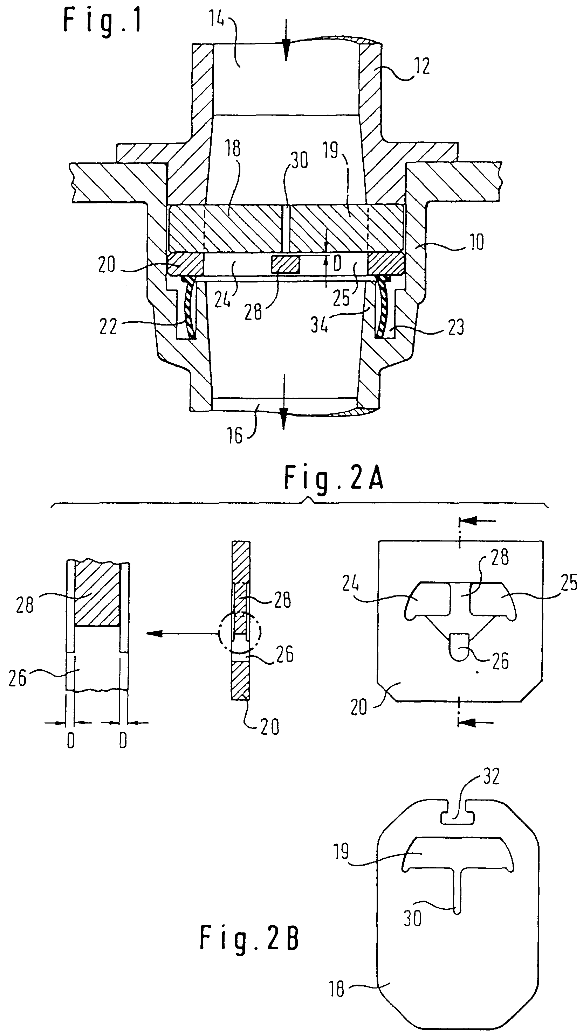

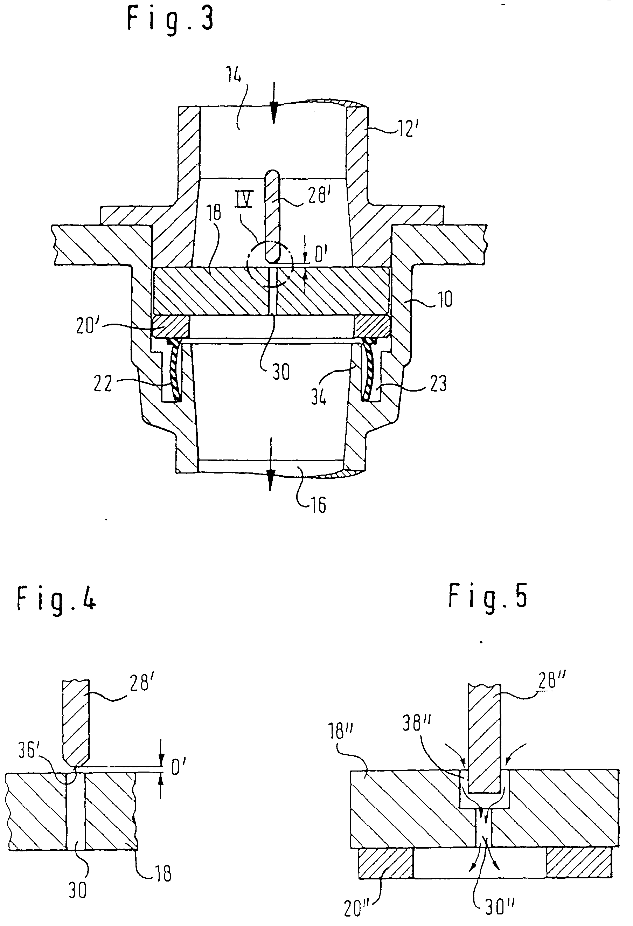

Nachfolgend wird unter Bezugnahme auf die Fig. 1 und 2 eine erste Ausführungsform der Erfindung beschrieben.

Das in Fig. 1 dargestellte Schieberventil besteht aus einem Ventilgehäuse, das aus einem Gehäuse 10 und einer Abdeckung 12 zusammengesetzt ist. In der Abdeckung 12 befindet sich ein Einlaß 14 und im Gehäuse 10 ein Auslaß 16, wobei die Durchflußrichtung des Ventils vom Einlaß 14 zum Auslaß 16 verläuft. Zwischen der Abdeckung 12 und dem Gehäuse 10 sind innerhalb des Ventilgehäuses ein Schieber 18 sowie eine Blende 20 angeordnet. Eine Dichtfeder 22 aus Gummimaterial ist in einer Ringnut 23 des Gehäuses 10 angeordnet und drückt die Blende 20 an den Schieber 18, der wiederum an einem Flanschbereich der Abdeckung 12 anliegt.

Die in Fig. 2A dargestellte Blende 20 besitzt drei Durchflußöffnungen 24, 25 und 26, die an eine einstückig mit der Blende 20 ausgebildete Rippe 28 angrenzen. Wie die vergrößerte Darstellung des strichpunktierten Bereiches von Fig. 2A zeigt, besitzt die Rippe 28 nicht die gleiche Dicke wie die Blende 20. Mit anderen Worten befindet sich zwischen der Rippe 28 und der Ober- bzw. Unterseite der Blende 20 ein Zwischenraum D von ca. 0,3 mm (siehe auch Fig. 1).

Der in Fig. 2B dargestellte Schieber 18 besteht aus Keramikmaterial und ist mit einer Durchflußöffnung 19 versehen, die einen schlitzartig ausgebildeten Bereich 30 aufweist. Insgesamt besteht die Durchflußöffnung 19 aus einem im wesentlichen trapezförmigen Bereich sowie aus dem sich in der Mittelsymmetrielinie anschließenden schlitzartigen Bereich 30. Eine T-förmige Aussparung 32 dient zum Einsetzen des Endes eines Bowdenzuges.

Bei Betrieb des oben beschriebenen Schieberventils wird ein Bowdenzug betätigt, der in die Öffnung 32 des Schiebers 18 eingehängt ist. Hierbei verschiebt sich der Schieber 18 relativ zu der ortsfesten Blende 20, wodurch sich der durch die Durchflußöffnungen 24, 25 und 26 der Blende sowie die Durchflußöffnungen 19 und 30 des Schiebers gebildete Querschnitt verändert. Da die Dichtfeder 22 stets die Blende 20 gegen den Schieber 18 drückt, kann aufgrund der hohen Oberflächengüten der Bauteile dort kein Wasser austreten. Sofern sich der Wasserdruck des in Fig. 1 dargestellten Ventils erhöht, wird der Schieber 18 zusammen mit der Blende 20 gegen einen im Gehäuse 10 vorgesehenen Ringflansch 34 gedrückt. Hierbei bleibt jedoch der Abstand D zwischen dem schlitzartig ausgebildeten Bereich 30 des Schiebers 18 und der Rippe 28 der Blende 20 stets aufrechterhalten, so daß keine Druckabhängigkeit der Drosselwirkung vorhanden ist. Durch die Variation des Maßes D kann die Durchflußmenge im Bereich bis zu 65% des Ventilhubes gemäß Kundenwunsch angepaßt werden.

Die Durchflußcharakteristik des in Fig. 1 dargestellten Ventils ist in Fig. 6 dargestellt und mit E bezeichnet. Wie klar zu erkennen ist, ergibt sich erfindungsgemäß eine wesentlich feinfühligere Regelung bis zu einem Bereich von ca. 70% Hub.

Nachfolgend wird unter Bezugnahme auf Fig. 3 eine weitere vorteilhafte Ausführungsform der Erfindung beschrieben. Das in Fig. 3 dargestellte Schieberventil entspricht im wesentlichen der in Fig. 1 dargestellten Ausführungsform, wobei für gleiche Teile gleiche Bezugszeichen verwendet wurden. Die in Fig. 3 dargestellte Blende 20' besitzt jedoch insgesamt lediglich eine Durchflußöffnung. Darüber hinaus ist eine einstückige mit einer Abdeckung 12' verbundene Rippe 28' vorgesehen, die in Durchflußrichtung vor dem schlitzartig ausgebildeten Bereich 30 des Schiebers 18 angeordnet ist. Die Rippe 28' ist an ihrer entgegen zur Flußrichtung gerichteten Stirnseite abgerundet, wobei die in Flußrichtung gerichtete Stirnseite doppelseitig angefast ist. Hierbei besitzt die zwischen den Fasen verbleibende Stirnfläche 36' der Rippe 28' eine geringere Breite als der schlitzartig ausgebildete Bereich 30 des Schiebers 18. Zwischen der Stirnseite 36' der Rippe 28' und der Oberfläche des Schiebers 18 ist ein geringer Abstand D' in der Größenordnung von ca. 0,3 mm vorgesehen.

In Fig. 5 ist ein Schieberventil gemäß einer weiteren Ausbildung der Erfindung teilweise dargestellt. Dieses Schieberventil ist grundsätzlich wie das in Fig. 3 dargestellte Ventil ausgebildet und umfasst einen Schieber 18'' und eine Blende 20''. Eine gehäusefeste Rippe 28'' hat einen im wesentlichen rechteckigen Querschnitt, wobei der Schieber 18'' einen schlitzartig ausgebildeten Bereich aufweist, der zweistufig ausgebildet ist. Diese zweistufige Ausbildung wird durch einen in dem Schieber 18'' ausgebildeten Schlitz 38'' erreicht, an den sich ein weiterer Schlitz 30'' anschließt. Hierbei ist der Schlitz 38'' breiter als der Schlitz 30''. Die Breite des Schlitzes 38'' ist größer als die Breite der Rippe 28''. Außerdem reicht die Rippe 28'', die einstückig mit der Abdeckung ausgebildet ist, in den Schlitz 38'' hinein, wodurch auch bei einer Verschiebung des Schiebers 18'' in Durchflußrichtung aufgrund eines erhöhten Druckes gewährleistet ist, daß sich stets ein verengter Strömungsquerschnitt zwischen der Rippe 28'' und dem Schieber 18'' befindet. Hierdurch ist die Druckabhängigkeit des Ventils verringert.

## Patentansprüche

1. Schieberventil, mit
- einem Ventilgehäuse (10, 12, 12'), mit einem Durchflußkanal zwischen einem Einlaß (14) und einem Auslaß (16);
- einer Blende (20, 20', 20''), die eine Durchflußöffnung (24, 25, 26) aufweist;
- einem Schieber (18, 18''), der eine Durchflußöffnung (19) mit zumindest einem schlitzartig ausgebildeten Bereich (30, 30") aufweist; und
- einer Dichtfeder (22);
- wobei die Blende (20, 20', 20'') und der Schieber (18, 18'') zur Regulierung des Durchflusses relativ zueinander bewegbar sind,
dadurch **gekennzeichnet**, daß
in Durchflußrichtung gesehen vor oder hinter dem schlitzartig ausgebildeten Bereich (30, 30'') eine Rippe (28, 28', 28") und zwischen der Rippe und dem Schieber ein geringer Abstand (D) vorgesehen ist.

2. Schieberventil nach Anspruch 1,
dadurch **gekennzeichnet**, daß
die Rippe (28) an der Blende (20) ausgebildet ist.

3. Schieberventil nach einem der vorstehenden Ansprüche,
dadurch **gekennzeichnet**, daß
die Durchflußöffnung der Blende (20) durch zwei oder drei räumlich voneinander getrennte Öffnungen (24, 25, 26) gebildet ist.

4. Schieberventil nach Anspruch 3,
dadurch **gekennzeichnet**, daß
die Rippe (18) zwischen zwei Öffnungen (24, 25) gebildet ist.

5. Schieberventil nach Anspruch 4,
dadurch **gekennzeichnet**, daß
in der Blende drei Öffnungen (24, 25, 26) vorgesehen sind, welche an die Rippe (28) angrenzen.

6. Schieberventil nach einem der Ansprüche 2 bis 5,
dadurch **gekennzeichnet**, daß
die Rippe (28) einstückig mit der Blende (20) ausgebildet ist.

7. Schieberventil nach Anspruch 1,
dadurch **gekennzeichnet**, daß
der Abstand D ca. 0,3 mm beträgt.

8. Schieberventil nach einem der Ansprüche 2 bis 7,
dadurch **gekennzeichnet**, daß
die Rippe (28) breiter ist als der schlitzartig ausgebildete Bereich (30).

9. Schieberventil nach Anspruch 1,
dadurch **gekennzeichnet**, daß
die Rippe (28', 28") am Ventilgehäuse (12') ausgebildet ist.

10. Schieberventil nach Anspruch 8,
dadurch **gekennzeichnet**, daß
die Rippe (28', 28'') einstückig am Ventilgehäuse (12') ausgebildet ist.

11. Schieberventil nach einem der Ansprüche 9 oder 10,
dadurch **gekennzeichnet**, daß
die Rippe (28') doppelseitig angefast ist.

12. Schieberventil nach Anspruch 11,
dadurch **gekennzeichnet**, daß
die Rippe (28') breiter ist als der schlitzartig ausgebildete Bereich (30, 30'') , wobei die zwischen den Fasen verbleibende Stirnseite (36') der Rippe (28') schmäler ist als der schlitzartig ausgebildete Bereich (30).

13. Schieberventil nach einem der Ansprüche 9 bis 12,
dadurch **gekennzeichnet**, daß
der schlitzartig ausgebildete Bereich des Schiebers (18'') durch einen ersten Schlitz (38'') und einen zweiten Schlitz (30''), die verschieden breit sind, gestuft ausgebildet ist, wobei der erste Schlitz (38'') breiter ist als die Rippe (28'').

14. Schieberventil nach einem der Ansprüche 9 bis 13,
dadurch **gekennzeichnet**, daß
eine Stirnseite der Rippe (28', 28'') abgerundet ist.

15. Schieberventil nach einem der vorstehenden Ansprüche,
dadurch **gekennzeichnet**, daß
Blende (20, 20', 20'') und Schieber (18, 18") plan aufeinander aufliegen.

16. Schieberventil nach einem der vorstehenden Ansprüche,
dadurch **gekennzeichnet**, daß
die Blende (20, 20', 20'') in Durchflußrichtung hinter dem Schieber (18, 18") angeordnet ist.

17. Schieberventil nach einem der vorstehenden Ansprüche,
dadurch **gekennzeichnet**, daß
im Bereich der Dichtfeder (22) ein gehäusefester Anschlag (34) für die Blende (20, 20', 20'') vorgesehen ist.

## Claims

1. Slide valve, with
- a valve housing (10, 12, 12'), with a passage duct between an inlet (14) and an outlet (16);
- a shutter (20, 20', 20") which has a passage opening (24, 25, 26);
- a slide (18, 18"), which has a passage opening (19) with at least one area(30, 30") in a slot shape; and
- a seal spring (22);
- the shutter (20, 20', 20") and the slide (18, 18") being movable relative to one another in order to regulate the throughflow,
characterised in that,
seen in the through flow direction, there are provided in front of and behind the area (30, 30") in a slot shape, a rib (28, 28', 28") and, between the rib and the slide, a small spacing (D).

2. Slide valve according to claim 1,
characterised in that the rib (28) is formed on the shutter (20).

3. Slide valve according to one of the preceding claims,
characterised in that the passage opening of the shutter (20) is formed by two or three openings (24, 25, 26) spatially separated from one another.

4. Slide valve according to claim 3,
characterised in that the rib (18) is formed between two openings (24, 25).

5. Slide valve according to claim 4,
characterised in that there are provided in the shutter three openings (24, 25, 26) which adjoin the rib (28).

6. Slide valve according to one of claims 2 to 5,
characterised in that the rib (28) is formed integrally with the shutter (20).

7. Slide valve according to claim 1,
characterised in that the spacing (D) comes to about 0.3 mm.

8. Slide valve according to one of claims 2 to 7,
characterised in that the rib (28) is wider than the area (30) in a slot shape.

9. Slide valve according to claim 1,
characterised in that the rib (28', 28") is formed on the valve housing (12').

10. Slide valve according to claim 8,
characterised in that the rib (28', 28") is formed integrally on the valve housing (12').

11. Slide valve according to one of claims 9 or 10,
characterised in that the rib (28') is chamfered on both sides.

12. Slide valve according to claim 11,
characterised in that the rib (28) is wider than the slot-shaped area (30, 30"), the end face (36') of the rib (28') remaining between the chamfers being narrower than the slot-shaped area (30).

13. Slide valve according to one of claims 9 to 12,
characterised in that the slot-shaped area of the slide (18") is formed in a stepped manner by a first slot (38")and a second slot (30"), which are of differing widths, the first slot (38") being wider than the rib (28").

14. Slide valve according to one of claims 9 to 13,
characterised in that one end face of the rib (28', 28") is rounded.

15. Slide valve according to one of the preceding claims,
characterised in that the shutter (20, 20', 20") and slide (18, 18") lie on one another in a planar fashion.

16. Slide valve according to one of the preceding claims,
characterised in that the shutter (20, 20', 20") is disposed in the flow direction behind the slide (18, 18").

17. Slide valve according to one of the preceding claims,
characterised in that a stop (34) secured to the casing is provided for the shutter (20, 20', 20") in the region of the seal spring (22).

## Revendications

1. Vanne à passage direct, comprenant
- un corps de vanne (10, 12, 12') comportant un canal de passage d'écoulement entre une entrée (14) et une sortie (16);
- un diaphragme (20, 20', 20") qui comporte un orifice de passage d'écoulement (24, 25, 26);
- un obturateur (18, 18") qui comporte un orifice de passage d'écoulement (19) avec au moins une zone (30, 30") en forme de fente; et
- un ressort d'étanchéité (22);
- le diaphragme (20, 20', 20") et l'obturateur (18, 18") étant mobiles relativement l'un par rapport à l'autre pour la régulation du débit,
**caractérisée** en ce qu'il est prévu, vu dans la direction de l'écoulement de passage, avant ou après la zone en forme de fente (30, 30"), une nervure (28, 28', 28"), ainsi qu'un faible intervalle (D) entre la nervure et l'obturateur.

2. Vanne à passage direct selon la revendication 1, **caractérisée** en ce que la nervure (28) est réalisée sur le diaphragme (20).

3. Vanne à passage direct selon l'une des revendications précédentes, **caractérisée** en ce que l'orifice de passage d'écoulement du diaphragme (20) est formée par deux ou trois orifices (24, 25, 26) séparés physiquement les uns des autres.

4. Vanne à passage direct selon la revendication 3, **caractérisée** en ce que la nervure (28) est formée entre deux orifices (24, 25).

5. Vanne à passage direct selon la revendication 4, **caractérisée** en ce que dans le diaphragme sont prévus trois orifices (24, 25, 26), qui sont adjacents à la nervure (28).

6. Vanne à passage direct selon l'une des revendications 2 à 5, **caractérisée** en ce que la nervure (28) est réalisée d'un seul tenant avec le diaphragme (20).

7. Vanne à passage direct selon la revendication 1, **caractérisée** en ce que la valeur de l'intervalle (D) est d'environ 0,3 mm.

8. Vanne à passage direct selon l'une des revendications 2 à 7, **caractérisée** en ce que la nervure (28) est plus large que la zone en forme de fente (30).

9. Vanne à passage direct selon la revendication 1, **caractérisée** en ce que la nervure (28', 28") est réalisée sur le corps de vanne (12').

10. Vanne à passage direct selon la revendication 8, **caractérisée** en ce que la nervure (28', 28") est réalisée d'un seul tenant avec le corps de vanne (12').

11. Vanne à passage direct selon l'une des revendications 9 ou 10, **caractérisée** en ce que la nervure (28') est chanfreinée des deux côtés.

12. Vanne à passage direct selon la revendication 11, **caractérisée** en ce que la nervure (28') est plus large que la zone en forme de fente (30, 30"), la face frontale résiduelle (36'), entre les chanfreins, de la nervure (28'), étant plus étroite que la zone en forme de fente (30).

13. Vanne à passage direct selon l'une des revendications 9 à 12, **caractérisée** en ce que la zone en forme de fente de l'obturateur (18") est réalisée de manière étagée par une première fente (38") et une seconde fente (30"), qui sont d'une largeur différente, la première fente (38") étant plus large que la nervure (28").

14. Vanne à passage direct selon l'une des revendications 9 à 13, **caractérisée** en ce qu'une face frontale de la nervure (28', 28") est arrondie.

15. Vanne à passage direct selon l'une des revendications précédentes, **caractérisée** en ce que le diaphragme (20, 20', 20") et l'obturateur (18, 18") reposent de manière plane l'un sur l'autre.

16. Vanne à passage direct selon l'une des revendications précédentes, **caractérisée** en ce que le diaphragme (20, 20', 20") est disposé après l'obturateur (18, 18") en se référant à la direction de l'écoulement de passage.

17. Vanne à passage direct selon l'une des revendications précédentes, **caractérisée** en ce que dans la zone du ressort d'étanchéité (22), est prévue une butée (34) fixe avec le carter et destinée au diaphragme (20, 20', 20").
